# EUROPEAN PATENT SPECIFICATION

(11) **EP 3 239 009 B1**
(45) Date of publication and mention of the grant of the patent: **25.03.2020**
(21) Application number: 17168886.4
(22) Date of filing: 01.05.2017
(51) Int. Cl.: B60T 13/08, B60T 13/66

(54) **TOWED VEHICLE BRAKING SYSTEM**
BREMSSYSTEM FÜR EIN GEZOGENES FAHRZEUG
SYSTÈME DE FREINAGE DE VÉHICULE TRACTÉ

(30) Priority: 29.04.2016 NL 2016703
(43) Date of publication of application: 01.11.2017
(73) Proprietor: V.O.F. H.J. Busscher en Zn., 7595 LG Weerselo (NL)
(72) Inventor: Seijger, Olav Johannes, 5508 LT Veldhoven (NL); Busscher, Theo Sigebertus Gerardus, 7595 LG Weerselo (NL)
(74) Representative: Jacobs, Bart

(56) References cited:
- EP-A2- 0 319 970
- EP-A2- 1 964 741
- WO-A1-01/14188
- WO-A1-86/02323
- WO-A1-97/03869
- WO-A1-03/045755
- DE-C- 439 728
- DE-U1-202005 012 234
- US-A- 3 955 652

## Description

The present invention relates to a braking system for a towed vehicle and to a towed vehicle comprising the same. In general, a towing vehicle is a powered vehicle such as a car or truck, whereas a towed vehicle is an unpowered vehicle. A well known example of a towed vehicle is a trailer.

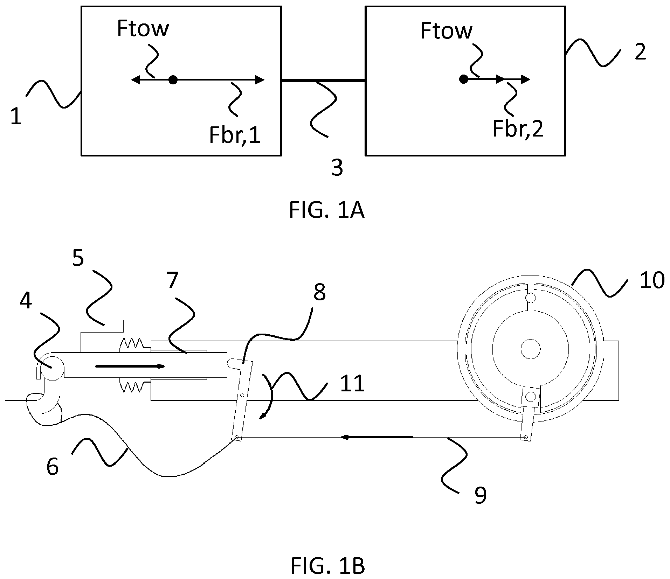

A known example of a braking system for a towed vehicle is illustrated in figures 1A and 1B. Figure 1A presents a principle schematic of a towing vehicle 1 that is mechanically coupled, by a mechanical coupling 3, to a towed vehicle, whereas figure 1B illustrates a known configuration for a braking system for a towed vehicle. This configuration is known as an overrun system.

As illustrated in figure 1B, mechanical coupling 3 could include known elements such as a tow hitch in the form of a tow ball 4 onto which a handle bar 5 of towed vehicle 2 can be coupled. For safety reasons, a brake away cable 6 is provided to couple towed vehicle 2 to towing vehicle 1. Towed vehicle 2 is provided with a linearly guided bush 7 that allows handle bar 5 to translate back and forth relative to a frame of towed vehicle 2. At one end, handle bar 5 is connected to one end of a lever 8. The other end of lever 8 is coupled to a braking rod 9 by which brake 10 can be actuated.

Towing vehicle 1 usually provides signals to towed vehicle 2 such as a braking signal, which indicates whether or not the braking system of towing vehicle 1 is activated. Furthermore, towing vehicle 1 may provide electrical power and turn light signals to towed vehicle 2. These latter signals allow replication of the rear turn lights of towing vehicle 1 on the rear side of towed vehicle 2.

When towing vehicle 1 and towed vehicle 2 are moving together and towing vehicle 1 brakes, handle bar 5 will be pushed backwards relative to the frame of towed vehicle 2. This will cause lever 8 to pivot as illustrated by arrow 11 thereby exerting a pulling force onto brake 10 via braking rod 9. Consequently, brake 10 will be actuated and a net braking force Fbr,2 will be exerted onto towed vehicle 2.

Now referring back to figure 1A, and assuming that a net braking force Fbr,1 is applied to towing vehicle by its braking system, the net force exerted on towing vehicle 1 can be represented by F1=Ftow-Fbr,1, wherein Ftow represents the pushing force exerted by towed vehicle 2 onto towing vehicle 1. When towed vehicle 2 brakes harder than towing vehicle 1, this force may be directed in the opposite direction to what is shown in figure 1A. Of course, towed vehicle 2 will be experience a reaction force Ftow, being the pushing force exerted by towing vehicle 1.This force is in the same direction as braking force Fbr,2. Consequently, the net force on towed vehicle 2 is given by F2=Ftow+Fbr,2.

Neglecting the influence of the movement of handle bar 5 relative to the frame of towed vehicle 2, it can be assumed that the acceleration (being negative) of towing vehicle 1, i.e. a1, and the acceleration of towed vehicle 2, i.e. a2, must be equal. Taking into account the respective masses of towing vehicle 1 and towed vehicle 2, m1 and m2, respectively, one finds that Fbr,1 - Ftow =- m1 x a1; Frb,2 + Ftow =- m2 x a2, which can be rewritten into Fbr,1+Fbr,2 = -(m1+m2) x a1 and Ftow = ½ x ((m1-m2) x a1 + Fbr,1- Fbr,2).

Within the context of the present invention, the wording towing force is used to refer to the force exerted by the towing vehicle onto the towed vehicle, and vice versa. The skilled person will appreciate that the towing force, being a vector, comprises a magnitude and direction.

A braking system is known from EP 2 163 446A1. This braking system differs from the overrun system depicted in figure 1B in that an actuator is used to actuate the brake instead of having a direct mechanical coupling such as handle bar 5 and lever 8 in figure 1B. The actuator is controlled by a controller. According to the above identified document, the controller receives input from an acceleration sensor mounted to the frame of the towed vehicle. It further receives input from a force sensor mounted downstream of the actuator, which force sensor is used to calculate an estimated current braking force. As such, the controller is able to control the actuator based on an acceleration of the towed vehicle and an estimated current braking force.

The existence of a net towing force (Ftow) exerted onto towing vehicle 1 may degrade the driving stability of towing vehicle 1, regardless the direction of this force. In case an excessive towing force is generated, dangerous situations may occur such as jackknifing.

The applicant has found that when using the system disclosed in EP 2 163 446A1 situations may still occur in which a towing force is generated that may be considered too high. It is therefore an object of the present invention to provide a braking system in which the force exerted on the towing vehicle is reduced further. Within the context of the present invention, reducing the towing force includes reducing the magnitude of the towing force.

A braking system as defined by the preamble of claim 1 is known from WO 03/045755A1. This document discloses an electrical braking device for vehicle trailers and method for operation thereof. The vehicle trailer, provided with a rigid drawbar arrangement, is braked by means of the overrun forces generated as a result of the braking of the tractor vehicle. The braking device comprises a force measuring arrangement which may be mounted on the rigid drawbar arrangement, which statically records the compression and tension forces acting axially in the drawbar arrangement, by means of tensometer strips, determines the wheel braking forces necessary for braking by means of a controller and correspondingly actuates the electrical wheel brakes.

Further braking systems are known from WO 97/03869 A1, DE 20 2005 012234 U1, WO 01/14188 A1, US 3 955 652 A, EP 1 964 741 A2, and WO 86/02323 A1.

According to the invention, this object is achieved with a braking system for a towed vehicle as defined in claim 1, which comprises a first mechanical coupling between the towed vehicle and a towing vehicle by which the towing vehicle is able to tow the towed vehicle, a brake for applying a braking force to a wheel of the towed vehicle, an actuator for actuating said brake, and a brake signal receiver for receiving a brake signal from the towing vehicle. The brake signal indicates whether a braking system of the towing vehicle has been activated or not. According to the invention, the braking system further comprises a controller for controlling the actuator.

The towed vehicle braking system further comprises a coupling force determination unit that is mechanically coupled to the first mechanical coupling, said coupling force determination unit being configured to output a coupling signal that is indicative for a towing force that is exerted by the towing vehicle onto the towed vehicle, and vice versa, through the first mechanical coupling, said controller being configured for controlling the actuator in dependence of the coupling signal and the received brake signal to reduce the towing force.

The coupling force determination unit comprises a force sensor for measuring the towing force, said force sensor being mechanically coupled to the first mechanical coupling. Force sensors are known in the art and require no further description. These sensors can for instance be based on the piezoelectric effect or force dependent resistors.

According to the invention, the force sensor comprises a force sensing spring that is arranged in between the first mechanical coupling and a frame of the towed vehicle, a position determination unit for determining the amount of extension or compression of the force sensing spring, and a force calculation unit for calculating the towing force based on a spring constant of the force sensing spring and the determined amount of extension or compression. The force sensor further comprises a force sensing spring damper for damping the relative movement between the first mechanical coupling and the frame of the towed vehicle. This damper may be integrated in or placed parallel to the force sensing spring.

The invention proposes to use a closed control loop taking the towing force in the first mechanical coupling as an error input to control the applied braking force. In this way, the braking system will always try to minimize the towing force, at least to an acceptable extent.

The braking system preferably comprises a handbrake for manually actuating the brake. More in particular, the braking system is preferably configured such that, under normal working conditions, the brake is actuated when the handbrake is operated regardless of the control of the actuator by the controller. To this end, the braking system may further comprise a third mechanical coupling that mechanically couples the actuator, the handbrake, and the brake to allow the brake to be actuated both by the handbrake and by the actuator. Alternatively, the braking system may further comprise a handbrake and a handbrake switch for detecting whether the handbrake is activated and for outputting a corresponding handbrake signal to the controller, wherein the controller may be configured to control the actuator to cause a braking force to be applied in dependence of the handbrake signal.

The handbrake is configured for manual actuation. This means that the user may manually actuate the handbrake for example by pulling a handle or by pressing an electronic switch. The invention does not exclude other options for a user to actuate the handbrake.

The controller may be configured to control the actuator only when the towing force corresponds to a pushing force exerted by the towing vehicle onto the towed vehicle that is above a first predefined threshold or when the towing force corresponds to a pulling force exerted by the towed vehicle onto the towing vehicle that is above a second predefined threshold. It should be noted that in most practical situation a towing force exists, even if both the towed vehicle and the towing vehicle are moving at constant speed. For example, such towing force may be required to overcome the frictional forces experienced by the towed vehicle. However, using a first and second threshold may prevent the controller for continuously controller the actuator. Such behavior may result in an uncomfortable driving experience.

A drawback of most known force sensors is that they are relatively costly. According to the invention, this is addressed by having a force sensor that comprises a force sensing spring that is arranged in between the first mechanical coupling and a frame of the towed vehicle, a position determination unit for determining the amount of extension or compression of the force sensing spring, and a force calculation unit for calculating the towing force based on a spring constant of the force sensing spring and the determined amount of extension or compression. Here, it should be noted that the force calculation unit may be arranged in the controller.

Additionally, the coupling force determination unit may comprise a first towing force switch configured to determine whether the towing force exceeds the first predefined threshold and/or a second towing force switch configured to determine whether the towing force exceeds the second predefined threshold.

The first mechanical coupling may comprise a first member that is configured to be coupled to the towing vehicle, and a second member that is moveably coupled to said first member and is fixedly connected to a frame of the towed vehicle. The first towing force switch may comprise a first switch contacting member that is fixedly coupled to one of the first member and the second member, a first spring arranged for spring biasing the relative movement of the first member and the second member, and a first switch that is fixedly coupled to the other of the first member and the second member. The first towing force switch may be configured to output a first switching signal to the controller when the first switch contacting member engages said first switch, wherein the spring is configured to allow the first switch contacting member to engage said first switch only after the first member exerts a pushing force on the second member that exceeds the first predefined threshold.

Further to the above, the second towing force switch may comprise a second switch contacting member that is fixedly coupled to one of the first member and the second member, a second spring arranged for spring biasing the relative movement of the first member and the second member, and a second switch that is fixedly coupled to the other of the first member and the second member. The second towing force switch may be configured to output a second switching signal to the controller when the second switch contacting member engages said second switch, wherein the second spring is configured to allow the second switch contacting member to engage said second switch only after the first member exerts a pulling force on the second member that exceeds the second predefined threshold.

In the abovementioned embodiments of the force switch, a spring biasing force exerted by the first and/or second spring may be adjustable. Additionally or alternatively, the braking system may further comprise a damper for damping the relative movement of the first and second members.

The controller is preferably configured to only start controlling the actuator when a braking signal is received from the towing vehicle that indicates that the braking system of the towing vehicle is activated. In general, it is not desired to generate a braking force if the towing vehicle is moving at uniform speed. However, when towing vehicle brakes, controller should control the actuator to cause a braking force. After the towing vehicle has stopped braking, the controller normally still controls the actuator in order for the braking force to be reduced from the level during the time the towing vehicle was braking. Accordingly, there exists a non-zero time that is required for the braking system to stop braking. In addition, there exists a non-zero time that is required for the braking system to start braking.

The braking system may further comprise an actuator sensor for outputting a sensor signal that is indicative for the applied braking force, wherein the controller is configured for controlling the actuator in dependence of the coupling signal, the sensor signal, and the received brake signal. For example, the controller may be configured to control the actuator such that a magnitude of a temporal rate of change in the braking force applied by the brake depends on at least one of the sensor signal and the coupling signal.

According to the invention, the actuator is mechanically coupled to the brake by a second mechanical coupling. This second mechanical coupling may be configured to transmit a force to the brake by which force the brake can be operated. For example, the second mechanical coupling may comprise a brake rod. In this case, the actuator sensor may comprise a force sensor that is mechanically coupled to the second mechanical coupling, wherein the force sensor is configured to sense the force that is transmitted to the brake, wherein the actuator sensor is configured to output the sensor signal in dependence of said sensed force. Alternatively, the force transmitted to the brake depends on at least one of a rotation or a displacement of the second mechanical coupling relative to the brake, wherein the actuator sensor is configured to sense the rotation and/or displacement and to output the sensor signal in dependence of the sensed rotation and/or displacement. It may also be possible that the actuator sensor comprises a voltage and/or current sensor for measuring a voltage and/or current that is supplied to or used by the actuator for actuating said brake. This measured current and/or voltage may be processed prior to sending the measured value to the controller. For example, the actuator may comprise an electric motor for generating the required mechanical force. The current and/or voltage and/or power required by this motor may provide an equally suitable sensor signal.

The actuator may be configured for receiving an actuation signal from the controller in dependence of which the actuator actuates the brake, wherein the actuator sensor comprises an estimating unit for estimating the braking force based on a current value of the actuation signal and/or one or more previous values of the actuation signal. For example, the actuator may comprise an electrical motor for displacing and/or rotating the second mechanical coupling. In this case, the actuation signal may be at least one of a current and voltage supplied to the electrical motor.

The controller may be configured to control the actuator to limit the applied braking force to be below a third predetermined threshold. As an example, the second mechanical coupling is provided with an actuator force switch that comprises a frame that is fixedly coupled to one of the brake and actuator and a switch member that is moveable mounted in said frame between a first and second position. The switch member may be fixedly coupled to the other of the brake and actuator, wherein the actuator force switch further comprises a switch that is configured for outputting a third switching signal when the switch member is in the first position. The actuator force switch may comprise a spring for spring biasing the switch member to be in the second position, wherein the spring is configured such that when a difference in force applied to the switch member and to the frame exceeds a fourth predetermined threshold, the switch member is at the first position. The actuator force switch may be connected to the controller and the controller may be configured for said limiting the applied braking force in dependence of the third switching signal.

The braking system may further comprise a power input for receiving power from the towing vehicle, wherein the power input is connected to at least one of the controller and the actuator, or another electrical component in the braking system, for providing power thereto.

According to a second aspect, the present invention provides a towed vehicle being configured to be towed by a towing vehicle, comprising the braking system as defined above.

Next, the invention will be described in more detail by referring to the appended drawings, wherein:
Figures 1A illustrates a general schematic illustrating a towing vehicle and a towed vehicle, and figure 1B illustrates a known overrun system;
Figure 2 illustrates an embodiment of a braking system in accordance with the present invention;
Figure 3, 4A and 4B illustrate different embodiments of a force switch to be used in the braking system of figure 2; and
Figure 5 illustrates the implementation of a manual brake in a braking system according to the present invention.

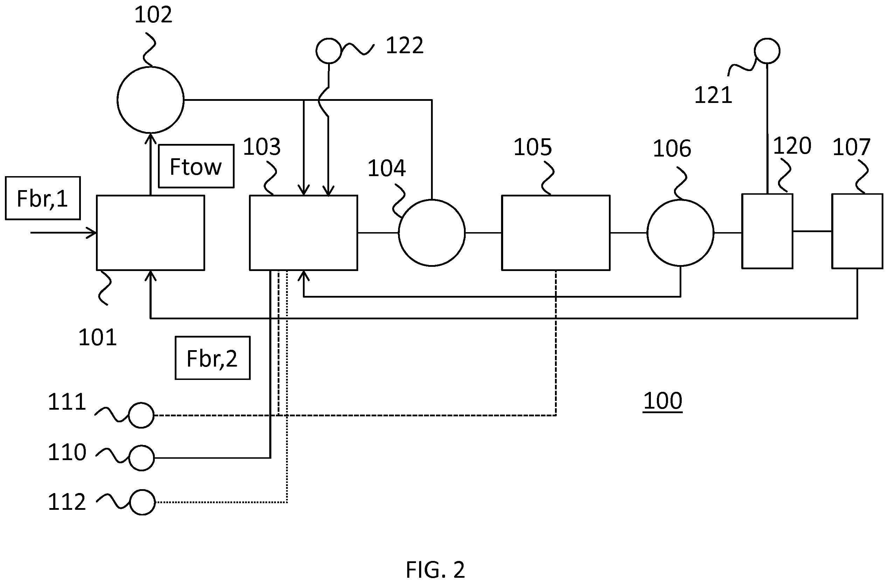

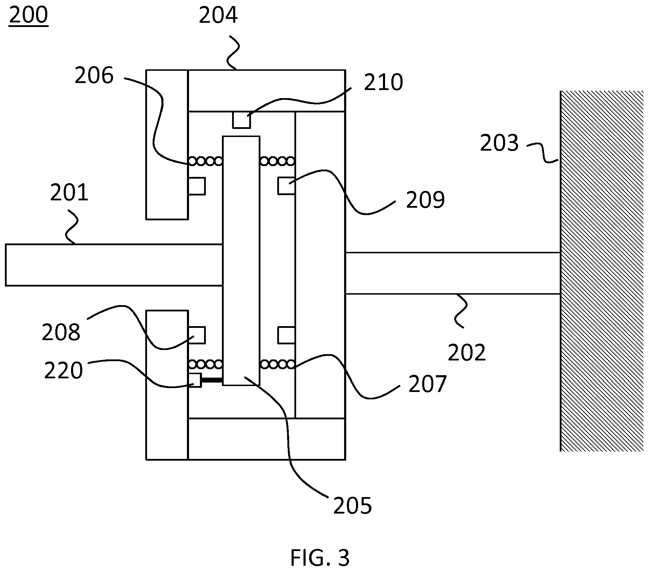

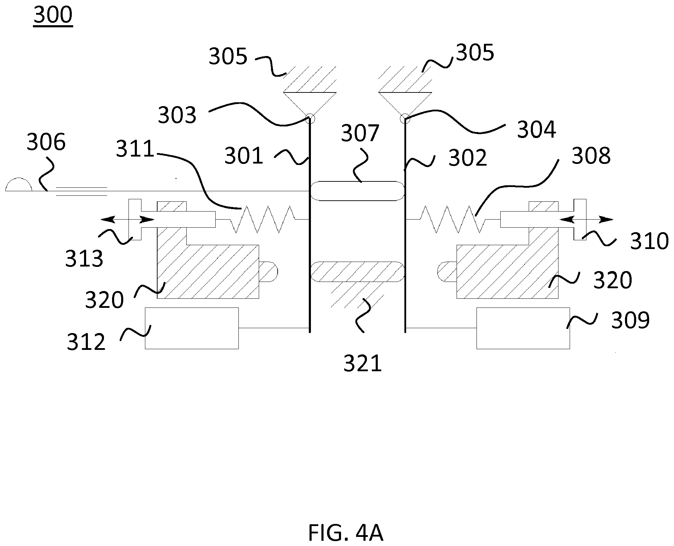

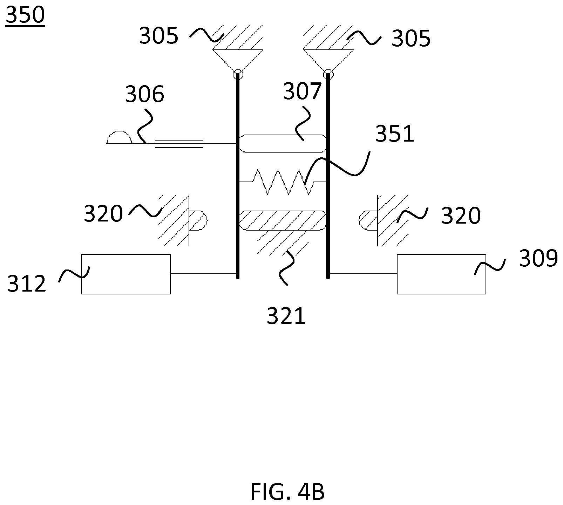

Figure 2 illustrates an embodiment of a braking system 100 in accordance with the present invention. This system comprises a controller 103 that receives input from a force sensor/switch 102. Here, force sensor/switch 102 measures the towing force that is transmitted by the first mechanical coupling between the towed vehicle and the towing vehicle and/or compares the towing force to one or more thresholds as will be described in conjunction with figures 3 and 4..

The towing force is a result of braking force Fbr,1 being exerted on the towing vehicle by its braking system, and braking force Fbr,2 being exerted on the towed vehicle by a brake 107. The skilled person will appreciate that brake 107 may relate to a plurality of brakes that are each configured to apply a braking force to a respective wheel. In this case, Fbr,2 would correspond to the sum of the applied braking forces. The towing force depends furthermore on the masses of the towed vehicle and the towing vehicle, as previously described in conjunction with figure 1A. The correlation between the braking forces Fbr,1 and Fbr,2 and the towing force is illustrated by block 101.

Controller 103 controls actuator 105, which in turn actuates brake 107. At various positions in the system, sensors or other characterizing elements may be included. For example, controller 103 provides an actuation signal to actuator 105. This signal can be measured by a first actuator sensor 104. This sensor determines a current and/or previous value of the actuation signal to determine or estimate the braking force that is applied by brake 107.

In addition to or in replacement of first actuator sensor 104, a second actuator sensor 106 can be used to determine or estimate the applied braking force. Compared to first actuator sensor 104, second actuator sensor 106 is arranged downstream of actuator 105.

Actuator 105 may be mechanically coupled to brake 107 using a braking rod. The position of this braking rod relative to a frame of the towed vehicle forms an indication of the applied braking force. Hence, second actuator sensor 106 may be configured to determine the position of the braking rod. Alternatively, second actuator sensor 106 may comprise a force sensor for sensing the force transmitted by the braking rod.

The information from at least one of the force sensor/switch 102, first actuator sensor 104, and second actuator sensor 106 is provided to controller 103, which controls actuator 105 in dependence of these received signals.

Towed vehicle may receive a braking signal 110 from the towing vehicle that indicates whether the braking system of the towing vehicle is activated or not. This signal may be related or may be identical to the signals in the towing vehicle that are responsible for activating the rear braking lights of the towing vehicle.

Towed vehicle may further receive electrical power 111 from the towing vehicle. This power can be used to power controller 103 and actuator 105. Other elements may also be powered, if necessary.

Towed vehicle may also receive a rear driving signal 112 from the towing vehicle that is indicative for whether the towing vehicle is put in reverse. Such signal may be provided to controller 103, which may use this signal to disable the actuation of actuator 105 if this signal is received regardless whether a braking signal 110 is received from the towing vehicle or not. In other words, when driving in reverse the braking system of the towed vehicle will not apply a braking force. Alternatively, controller 103 may provide a different actuation signal to actuator 105 depending on whether rear driving signal 112 is received. This allows the braking characteristics of the towed vehicle to be different in reverse.

The operation of braking system 100 can be described as follows. In a situation wherein towing vehicle and towed vehicle are both horizontally moving at identical constant speeds, a small towing force is exerted onto towed vehicle to overcome the frictional forces that are experienced by the towed vehicle. When the braking system of the towing vehicle is activated, a braking force Fbr,1 will be generated and a corresponding braking signal will be generated. As an example, the braking signal will change from a low level to a high level. This braking signal can be used for activating the rear braking lights on the towing vehicle. At the same time, the braking signal is provided to controller 103.

Due to the fact that the towing vehicle decelerates, it will exert a pushing force onto the towed vehicle. This pushing force is opposite to the small towing force that is required to overcome the frictional forces of the towed vehicle as described above.

The generated towing force will be sensed by force sensor/switch 102. More in particular, the force/switch 102 will determine whether the towing force is above a given threshold. In some embodiments, force/switch 102 will determine whether the towing force represents a pushing force exerted on the towed vehicle that exceeds a first predetermined threshold or whether the towing force represents a pulling force exerted on the towed vehicle that exceeds a second predetermined threshold. This latter threshold only applies when towed vehicle brakes harder than towing vehicle.

The first and/or second predefined thresholds define a towing force non-control range. Controller 103 may be configured to only control actuator 105 when the towing force is outside the towing force non-control range.

Assuming that the towing force is indeed outside this range, controller 103 will control actuator 105 by providing it with an actuation signal. When receiving the actuation signal, actuator 105 will actuate brake 107 accordingly. Consequently, a braking force Fbr,2 will be generated. The magnitude of braking force Fbr,2 as well as the temporal rate of change of braking force Fbr,2 may be controlled by controller 103. To this end, information from first actuator sensor 104, second actuator sensor 106, and/or force sensor/switch 102 may be used.

Due to the application of braking force Fbr,2, the resulting towing force may be reduced. This process of adapting the braking force Fbr,2 may continue until the resulting towing force lies within the towing force non-control range. Alternatively, controller 103 may always try to reduce the magnitude of the towing force as much as possible.

The type of actuator defines how controller 104 controls actuator 103. As an example, actuator 105 may be a rotary motor that drives a spindle on which a nut is arranged. The braking rod may be mechanically coupled to the nut, such that a rotational motion of the spindle is transformed into a translation motion of the braking rod. Alternatively, actuator 103 may comprise a rack and pinion to achieve the same motion transformation.

Actuator 103 may be self-locking, meaning that the braking rod will be held in the same position or that brake 107 will be actuated in the same manner, when actuator 105 is not currently controlled by controller 103.

In the examples above, the braking force Fbr,2 will be gradually increased or decreased. In other embodiments, actuator 105 and/or brake 107 may be configured to substantially directly apply a given braking force Fbr,2.

Controller 103 may control actuator 105 in dependence of various signals as mentioned above. For instance, controller 103 may provide actuation signals to actuator 105 to cause a relatively high rate of change in the braking force, in order to more quickly reduce the towing force. To this end, it may use a value of the towing force sensed by force sensor 102. This behavior can be further optimized by also including information of a currently applied braking force, obtained from actuator sensors 104, 106. As an example, if a currently applied braking force is relatively low, controller 103 may control actuator 105 to more quickly ramp up the braking force.

The generated braking force Fbr,2 may at some point be higher than the braking force Fbr,1 generated in the towing vehicle. In such circumstances, controller 103 will control actuator 105 to reduce the braking force Fbr,2. Also in this case, the control loop functions to reduce the towing force. Such situation will for instance occur if a braking force in towing vehicle is no longer generated.

The braking system may optionally further comprise a handbrake. Such handbrake can be a mechanical handbrake or an electrical handbrake, both of which are shown in figure 2 for illustrative purposes. Under normal working conditions, brake 107 will be actuated when the handbrake is operated regardless of the control of actuator 105 by controller 103.

The mechanical handbrake, as represented by 121 in figure 2, preferably comprises a handle which the user may operate. This handle is coupled to brake 107 by means of a mechanical transmission, such as a rod. At the same time, actuator 105 is mechanically coupled to brake 107, e.g. by means of a braking rod. Component 120 in figure 2 is configured to receive both these mechanical inputs and control brake 107 based on these inputs. As an example, component 120 may perform a mechanical "OR" function, meaning that brake 107 will be actuated if at least one of the mechanical inputs is intended to cause a braking action. In an embodiment, component 120 comprises a mechanical coupling that mechanically couples the actuator, the handbrake, and the brake to allow the brake to be actuated both by the handbrake and by the actuator.

The electrical handbrake, as represented by 122 in figure 2, may comprise an electrical handbrake switch that a user may operate, using the handbrake handle, to initiate a braking action. The handbrake switch is configured for detecting whether the handbrake is activated and for outputting a corresponding handbrake signal to controller 103. In turn, controller 103 may be configured to control actuator 105 to cause a braking force to be applied in dependence of the handbrake signal.

Force sensor/switch 102 may be configured to determine whether the towing force is above one or more predefined thresholds and/or may be configured to determine the magnitude and/or direction of the towing force. Figures 3 and 4 describe two different embodiments for a force sensor/switch.

In the embodiment in figure 3, force switch 200 is connected to a first member 201 that is coupled to the towing vehicle, at least when towing towed vehicle, and to a second member 202. This latter member is fixedly connected to a frame 203 of the towed vehicle. Second member 202 is fixedly coupled to a frame 204 in which a piston-like element 205, which is fixedly connected to first member 201, is moveably mounted. A first and second spring 206, 207 are mounted in between frame 204 and element 205. Furthermore, annular contact switches 208, 209 are mounted on the inside of frame 204, facing element 205. These switches are configured to change a state when they come into contact with element 205. For instance, when element 205 contacts switch 208, switch 208 will change to a low impedance state.

The spring constants of springs 206, 207 can be different. Similarly, a preloading may be applied to change the position of element 205 relative to frame 204 when no external forces are applied.

When a force is applied to first member 201 urging it to move towards frame 204, element 205 may move towards switch 209. Alternatively, when a force is applied to first member 201 urging it to move away from frame 203, element 205 may move towards switch 208. Only when the applied force to first member 201 exceeds a predefined threshold, determined by springs 206, 207, switches 208, 209 may change state. As such, force switch 200 can be used to determine whether the applied force is within or outside a given force range. Hence, force switch 200 can be used to determine whether the force is within the towing force non-control region as described above. It should be apparent to the skilled person that a different threshold can be set depending on the direction of the towing force. For example, different spring constants and/or different preloading of the springs and/or different positioning of element 205 can be used to realize different thresholds.

By leaving out one switch, e.g. switch 208 or 209, a one-directional force switch can be realized. Such force switch may be used in between brake 107 and actuator 105 to check whether the estimated braking force, determined using the force transmitted by the braking rod, does or does not exceed a predefined threshold. This information can be fed to controller 103 which may in turn, when the force exceeds the threshold, control the actuator to actuate brake 107 such that the braking force is reduced. In this way, the force in braking rod can be limited.

If only one switch is used and a proper amount of preloading is applied, element 205 is pushed against frame 204 on the side opposite to the switch. Only when the applied force to first member 201 exceeds the spring biasing force applied to element 205, may this latter element move towards the switch.

According to the invention, force sensor/switch 200 is equipped with a position sensor 210 that determines the position of element 205. By determining this position, the force between first and second members 201, 202, can be determined in an indirect manner, using knowledge about the spring constants. This same principle can be applied to determine the force without being bound to the abovementioned thresholds. For instance, a spring may be mounted in between first member 201 and second member 202. By monitoring the position of the first member 201 or the spring, the applied force can be determined. More in particular, force sensor/switch 200 may comprise a force sensing spring that is arranged in between the first mechanical coupling and a frame of the towed vehicle, and a position determination unit for determining the amount of extension or compression of the force sensing spring. Force sensor/switch 200 may output the determined amount of extension or compression as a signal to controller 103. The latter may comprise a force calculation unit for calculating the towing force based on a spring constant of the force sensing spring and the determined amount of extension or compression. Alternatively, the force calculation unit is comprised in force sensor/switch 200 itself.

Figure 3 further illustrates a damper 220 that is connected in between element 205 and element 204. This damper dampens the movement between first member 201, via element 205, and second member 202, via element 204. This damper is but a mere example and the invention is not limited to this particular embodiment. Other damper configurations, wherein a damper is configured to dampen the relative movement of the first and second members, can be equally used. In the other embodiments of the force switch to be discussed next, a damper similar to damper 220 is employed.

Figure 4A presents a different embodiment of a force switch 300. This switch comprises two levers 301, 302 that are hingedly connected to a frame 305 via respective hinges 303, 304. The first mechanical coupling in the form of a bar 306, or other mechanical coupling for which a transmitted force needs to be determined, engages levers 301, 302 using an element 307, which preferably is not fixedly mounted to levers 301, 302.

A spring 308 is used to push lever 302 against a support 321 that is fixedly connected to the frame of the towed vehicle. Similarly, a spring 311 is used to push lever 301 against support 321. Here, springs 308 and 311 have an adjustable spring biasing by means of setting screws 310, 313.

When bar 306 is pushed to the right in figure 4A, element 307 will push lever 302 towards the right against the spring biasing force realized by spring 308. Element 307, and thereby lever 302, will only move to the right when the applied pushing force to bar 306 exceeds the spring biasing force realized by spring 308. Similarly, element 307 and lever 301 will only move to the left when the applied pulling force to bar 306 exceeds the spring biasing force realized by spring 311. Consequently, two different thresholds can be defined.

When element 307 moves to the right, it will move away from lever 301. Similarly, when element 307 moves to the left, it will move away from lever 302. When lever 302 moves sufficiently far to the right, switch 309 will change its state. This movement is limited by a right limiter 320. Similarly, when lever 302 moves sufficiently far to the left, switch 312 will change its state. This movement is limited by a left limiter 320.

Similar to force switch 200, force switch 300 can be used to determine whether the force transmitted by bar 306 is within a given range. In addition, it can be used to only determine whether the transmitted force is above a given threshold. An advantage of force switch 300 is that bar 306 will not move unless the force applied to it exceeds the relevant threshold.

Figure 4B presents a force switch 350, which is a variation of force switch 300 in figure 4A. Here, the same or identical components are referred to using the same reference signs. Contrary to the embodiment in figure 4A, only a single spring 351 is used that is mounted between levers 301 and 302 and is configured to push levers 301, 302 against support 321. Also in this case, bar 306 will only move when the applied force is above a relevant threshold that is related to the amount of preloading of spring 351.

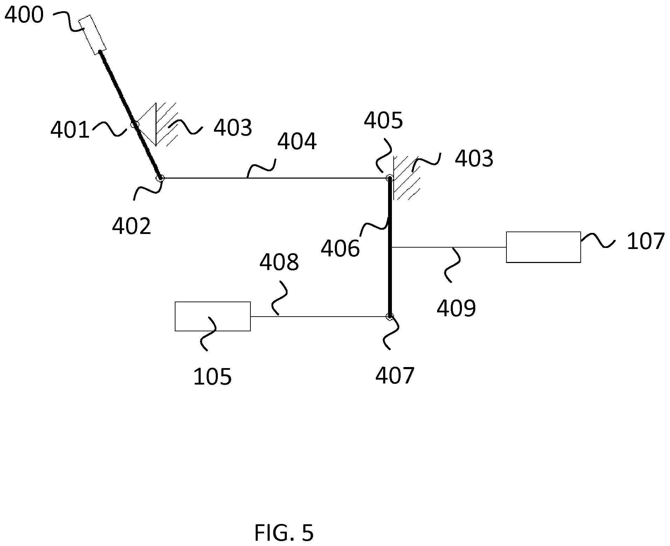

Figure 5 illustrates how a manual mechanical brake can be included in the braking system according to the present invention. Here, a manual brake may be formed by a lever 400 having a fulcrum 401 that connected to a frame 403. One end of lever 400 is hingedly connected, using a hinge 402, to a first bar 404. On an opposing end of first bar 404, a hinge 405 is provided that is supported on one side to frame 403 and which is able to move away from frame 403 by moving to the left in figure 5. Hinge 405 is connected to a second bar 406, which second bar is connected via a hinge 407 to a third bar 408. This last bar is connected to actuator 105.

When the actuator is actuated, and manual brake is not, third bar 408 is moved to the left, at least when an increase in braking force is desired. In this case, hinge 405 remains in a position against frame 403. As such, second bar 406 pivots about hinge 405 thereby causing fourth bar 409 to move away from brake 107.

Alternatively, when manual brake 400 is activated, and actuator 105 is not, the top of lever 400 in figure 5 is pulled to the right thereby causing lever 400 to pivot about fulcrum 401. As such, hinge 402 will move to the left thereby pulling hinge 405 to move away from frame 403 via first bar 404. In this case, hinge 407 will remain at substantially the same position and will serve as a pivot for second bar 406. Also in this case, fourth bar 409 moves away from brake 107.

Because hinge 407 needs to remain at substantially the same position during operation of manual brake 400, it is advantageous if actuator 105 is of the self-locking type such that third bar 408 remains essentially fixed whenever actuator 105 is not controlled by controller 103 and/or when actuator 105 is not powered.

In this example, the manual brake is mechanically coupled to brake 107. In other embodiments, manual brake operates a switch. The switching signal from this switch can be fed to controller 103 to allow an electrical brake.

Although the present invention has been described in detail using embodiments thereof, the skilled person would readily understand that various modifications are possible without deviating from the scope of the invention which is defined by the appended claims.

## Claims

1. A braking system (100) for a towed vehicle (2), comprising:
a first mechanical coupling (3) between the towed vehicle and a towing vehicle (1) by which the towing vehicle is able to tow the towed vehicle;
a brake (107) for applying a braking force to a wheel of the towed vehicle;
an actuator (105) for actuating said brake, wherein the actuator is mechanically coupled to the brake by a second mechanical coupling, said second mechanical coupling being configured to transmit a force to the brake by which force the brake can be operated and preferably comprising a brake rod;
a brake signal receiver for receiving a brake signal from the towing vehicle, said brake signal indicating whether a braking system of the towing vehicle has been activated or not; and
a controller (103) for controlling the actuator;
wherein the towed vehicle braking system further comprises a coupling force determination unit (102) that is mechanically coupled to the first mechanical coupling, said coupling force determination unit being configured to output a coupling signal that is indicative for a towing force that is exerted by the towing vehicle onto the towed vehicle, and vice versa, through the first mechanical coupling, said controller being configured for controlling the actuator in dependence of the coupling signal and the received brake signal to reduce the towing force;
wherein the coupling force determination unit comprises a force sensor (200) for measuring the towing force, said force sensor being mechanically coupled to the first mechanical coupling;
**characterized in that** the force sensor comprises:
a force sensing spring (206, 207) that is arranged in between the first mechanical coupling and a frame (203) of the towed vehicle;
a position determination unit (210) for determining the amount of extension or compression of the force sensing spring; and
a force calculation unit for calculating the towing force based on a spring constant of the force sensing spring and the determined amount of extension or compression;
wherein the force sensor further comprises a damper (220) for damping the relative movement between the first mechanical coupling and the frame of the towed vehicle.

2. The braking system according to claim 1, further comprising a handbrake for manually actuating the brake.

3. The braking system according to claim 1, wherein the actuator, the handbrake, and the brake are mechanically coupled by means of a third mechanical coupling to allow the brake to be actuated both by the handbrake and by the actuator.

4. The braking system according to any of the previous claims, further comprising an actuator sensor (104, 106) for outputting an actuator sensor signal that is indicative for the applied braking force, wherein the controller is configured for controlling the actuator in dependence of the coupling signal, the actuator sensor signal, and the received brake signal;
wherein the actuator sensor comprises a force sensor that is mechanically coupled to said second mechanical coupling, said force sensor being configured to sense the force that is transmitted to the brake, wherein the actuator sensor is configured to output the actuator sensor signal in dependence of said sensed force; or
wherein the actuator sensor comprises a voltage and/or current sensor for measuring a voltage and/or current that is supplied to or used by the actuator for actuating said brake.

5. The braking system according to claim 4, wherein the controller is configured to control the actuator such that a magnitude of a temporal rate of change in the braking force applied by the brake depends on at least one of the actuator sensor signal and the coupling signal.

6. The braking system according to claim 4 or 5, wherein the force transmitted to the brake depends on at least one of a rotation or a displacement of the second mechanical coupling relative to the brake, wherein the actuator sensor is configured to sense said rotation and/or displacement and to output the actuator sensor signal in dependence of said sensed rotation and/or displacement.

7. The braking system according to any of the claims 4-6, wherein the actuator is configured for receiving an actuation signal from the controller in dependence of which the actuator actuates said brake, said actuator sensor comprising an estimating unit for estimating the braking force based on a current value of the actuation signal and/or one or more previous values of the actuation signal.

8. The braking system according to claims 4, 6, and 7, wherein the actuator comprises an electrical motor for displacing and/or rotating the second mechanical coupling, and wherein the actuation signal is at least one of a current and voltage supplied to the electrical motor.

9. The braking system according to any of the previous claims, wherein the controller is configured to control the actuator only when the towing force corresponds to a pushing force exerted by the towing vehicle onto the towed vehicle that is above a first predefined threshold or when the towing force corresponds to a pulling force exerted by the towed vehicle onto the towing vehicle that is above a second predefined threshold.

10. The braking system according to any of the previous claims, wherein the controller is configured to control the actuator to limit the applied braking force to be below a third predetermined threshold;
wherein the second mechanical coupling is provided with an actuator force switch (200) that comprises a frame (204) that is fixedly coupled to one of the brake and actuator and a switch member (205) that is moveable mounted in said frame of the actuator force switch between a first and second position, wherein the switch member is fixedly coupled to the other of the brake and actuator, the actuator force switch further comprising a switch (208, 209) that is configured for outputting a third switching signal when the switch member is in the first position, and a spring (206, 207) for spring biasing the switch member to be in the second position, wherein the spring is configured such that when a difference in force applied to the switch member and to the frame of the actuator force switch exceeds a fourth predetermined threshold, the switch member is at the first position, wherein the actuator force switch is connected to the controller and the controller is configured for said limiting the applied braking force in dependence of the third switching signal.

11. The braking system according to any of the previous claims, further comprising a power input for receiving power from the towing vehicle, said power input being connected to the controller, the actuator, and/or another electrical component in the braking system.

12. A towed vehicle (2) being configured to be towed by a towing vehicle (1), comprising the braking system as defined in any of the previous claims.

## Patentansprüche

1. Bremssystem (100) für ein gezogenes Fahrzeug (2), das aufweist:
eine erste mechanische Kopplung (3) zwischen dem gezogenen Fahrzeug und einem Zugfahrzeug (1), durch die das Zugfahrzeug in der Lage ist, das gezogene Fahrzeug zu ziehen;
eine Bremse (107), um eine Bremskraft auf ein Rad des gezogenen Fahrzeugs auszuüben;
einen Aktuator (105), um die Bremse zu betätigen, wobei der Aktuator mechanisch mit der Bremse durch eine zweite mechanische Kopplung gekoppelt ist, wobei die zweite mechanische Kopplung dazu ausgestaltet ist, eine Kraft auf die Bremse zu übertragen, wobei die Bremse durch die Kraft betätigt werden kann und vorzugsweise eine Bremsstange aufweist;
einen Bremssignalempfänger, um ein Bremssignal von dem Zugfahrzeug zu empfangen, wobei das Bremssignal angibt, ob ein Bremssystem des ziehenden Fahrzeugs aktiviert wurde oder nicht; und
eine Steuereinheit (103), um den Aktuator zu steuern;
wobei das Bremssystem des gezogenen Fahrzeugs weiterhin eine Kopplungskraft-Bestimmungseinheit (102) aufweist, die mechanisch mit der ersten mechanischen Kopplung gekoppelt ist, wobei die Kopplungskraft-Bestimmungseinheit ausgestaltet ist, um ein Kopplungssignal auszugeben, das eine Zugkraft angibt, die durch das Zugfahrzeug über die erste mechanische Kopplung auf das gezogene Fahrzeug ausgeübt wird und umgekehrt, wobei die Steuereinheit dazu ausgestaltet ist, den Aktuator in Abhängigkeit von dem Kopplungssignal und dem empfangenen Bremssignal zu steuern, um die Zugkraft zu verringern;
wobei die Kopplungskraft-Bestimmungseinheit einen Kraftsensor (200) aufweist, um die Zugkraft zu messen, wobei der Kraftsensor mechanisch mit der ersten mechanischen Kopplung gekoppelt ist;
**dadurch gekennzeichnet, dass** der Kraftsensor aufweist:
eine Krafterfassungsfeder (206, 207), die zwischen der ersten mechanischen Kopplung und einem Rahmen (203) des gezogenen Fahrzeugs angeordnet ist;
eine Positionsbestimmungseinheit (210), um die Größenordnung der Ausdehnung oder Zusammenpressung der Krafterfassungsfeder zu bestimmen; und
eine Kraftberechnungseinheit, um die Zugkraft basierend auf einer Federkonstante der Krafterfassungsfeder und der bestimmten Größenordnung der Ausdehnung oder der Zusammenpressung zu berechnen;
wobei der Kraftsensor weiterhin einen Dämpfer (220) aufweist, um die relative Bewegung zwischen der ersten mechanischen Kopplung und dem Rahmen des gezogenen Fahrzeugs zu dämpfen.

2. Bremssystem nach Anspruch 1, das weiterhin eine Handbremse aufweist, um die Bremse manuell zu betätigen.

3. Bremssystem nach Anspruch 1, wobei der Aktuator, die Handbremse und die Bremse mechanisch mittels einer dritten mechanischen Kopplung gekoppelt sind, um zu ermöglichen, dass die Bremse sowohl von der Handbremse als auch von dem Aktuator betätigt wird.

4. Bremssystem nach einem der vorhergehenden Ansprüche, das weiterhin einen Aktuatorsensor (104, 106) aufweist, um ein Aktuatorsensorsignal auszugeben, das die ausgeübte Bremskraft anzeigt, wobei die Steuereinheit ausgestaltet ist, den Aktuator in Abhängigkeit von dem Kopplungssignal, dem Aktuatorsensorsignal und dem empfangenen Bremssignal zu steuern;
wobei der Aktuatorsensor einen Kraftsensor aufweist, der mechanisch mit der zweiten mechanischen Kopplung gekoppelt ist, wobei der Kraftsensor ausgestaltet ist, um die Kraft zu erfassen, die auf die Bremse übertragen wird, wobei der Aktuatorsensor ausgestaltet ist, um das Aktuatorsensorsignal in Abhängigkeit von der erfassten Kraft auszugeben; oder
wobei der Aktuatorsensor einen Spannungs- und/oder Stromsensor aufweist, um eine Spannung und/oder einen Strom zu messen, der dem Aktuator zugeführt wird oder vom Aktuator verwendet wird, um die Bremse zu betätigen.

5. Bremssystem nach Anspruch 4, wobei die Steuereinheit ausgestaltet ist, den Aktuator so zu steuern, dass eine Größenordnung der zeitichen Änderungsrate in der Bremskraft, die von der Bremse ausgeübt wird, von wenigstens einem von dem Aktuatorsensorsignal und dem Kopplungssignal abhängt.

6. Bremssystem nach Anspruch 4 oder 5, wobei die auf die Bremse übertragene Kraft von wenigstens einem von einer Rotation oder einer Versetzung der zweiten mechanischen Kopplung bezüglich der Bremse abhängt, wobei der Aktuatorsensor ausgestaltet ist, die Rotation und/oder Versetzung zu erfassen und das Aktuatorsensorsignal in Abhängigkeit von der erfassten Rotation und/oder Versetzung auszugeben.

7. Bremssystem nach einem der Ansprüche 4 bis 6, wobei der Aktuator ausgestaltet ist, um ein Betätigungssignal von der Steuereinheit zu empfangen, wobei der Aktuator abhängig davon die Bremse betätigt, wobei der Aktuatorsensor eine Schätzeinheit aufweist, um die Bremskraft basierend auf einem Stromwert des Betätigungssignals und/oder einem oder mehreren vorhergehenden Werten des Betätigungssignals zu schätzen.

8. Bremssystem nach den Ansprüchen 4, 6 und 7, wobei der Aktuator einen Elektromotor aufweist, um die zweite mechanische Kopplung zu versetzen und/oder zu rotieren, und wobei das Betätigungssignal wenigstens eines ist von einem Strom und einer Spannung, die dem Elektromotor zugeführt werden.

9. Bremssystem nach einem der folgenden Ansprüche, wobei Steuereinheit ausgestaltet ist, den Aktuator nur zu steuern, wenn die Zugkraft einer Schubkraft entspricht, die vom Zugfahrzeug auf das gezogene Fahrzeug ausgeübt wird, die über einem ersten vordefinierten Grenzwert liegt, oder wenn die Zugkraft einer Ziehkraft entspricht, die vom gezogenen Fahrzeug auf das Zugfahrzeug ausgeübt wird, die über einem zweiten vordefinierten Grenzwert liegt.

10. Bremssystem nach einem der vorhergehenden Ansprüche, wobei die Steuereinheit ausgestaltet ist, den Aktuator zu steuern, um die ausgeübte Bremskraft auf unter einem dritten vorbestimmten Grenzwert zu begrenzen;
wobei die zweite mechanische Kopplung vorgesehen ist mit einem Aktuatorkraftschalter (200), der einen Rahmen (204) aufweist, der fest mit einem von der Bremse und dem Aktuator gekoppelt ist, und einem Schaltelement (205), das zwischen einer ersten und einer zweiten Position bewegbar im Rahmen des Aktuatorkraftschalters angebracht ist, wobei das Schaltelement fest mit dem anderen von der Bremse und dem Aktuator gekoppelt ist, der Aktuatorkraftschalter weiterhin einen Schalter (208, 209) aufweist, der ausgestaltet ist, um ein drittes Schaltsignal auszugeben, wenn sich das Schaltelement in der ersten Position befindet, und eine Feder (206, 207), um das Schaltelement in der zweiten Position mit der Feder vorzuspannen, wobei die Feder so ausgestaltet ist, dass wenn eine Kraftdifferenz, die auf das Schaltelement und den Rahmen des Aktuatorkraftschalters ausgeübt wird, einen vierten vorbestimmten Grenzwert überschreitet, sich das Schaltelement an der ersten Position befindet, wobei der Aktuatorkraftschalter mit der Steuereinheit verbunden ist und die Steuereinheit ausgestaltet ist, die ausgeübte Bremskraft in Abhängigkeit von dem dritten Schaltsignal zu begrenzen.

11. Bremssystem nach einem der vorhergehenden Ansprüche, das weiterhin einen Leistungseingang zur Aufnahme von Leistung von dem Zugfahrzeug aufweist, wobei der Leistungseingang mit der Steuereinheit, dem Aktuator und/oder einer anderen elektrischen Komponente im Bremssystem verbunden ist.

12. Gezogenes Fahrzeug (2), das ausgestaltet ist, um von einem Zugfahrzeug (1) gezogen zu werden, das das Bremssystem gemäß der Definition in einem der vorhergehenden Ansprüche aufweist.

## Revendications

1. Système de freinage (100) pour un véhicule tracté (2), comprenant :
un premier couplage mécanique (3) entre le véhicule tracté et un véhicule tracteur (1), par lequel le véhicule tracteur est apte à tracter le véhicule tracté ;
un frein (107) pour l'application d'une force de freinage à une roue du véhicule tracté ;
un actionneur (105) pour l'actionnement dudit frein, dans lequel l'actionneur est mécaniquement couplé au frein par un deuxième couplage mécanique, ledit deuxième couplage mécanique étant configuré pour transmettre une force au frein, par laquelle force le frein peut être actionné et de préférence comprenant une tige de frein ;
un récepteur de signal de frein pour la réception d'un signal de frein du véhicule tracteur, ledit signal de frein indiquant si un système de freinage du véhicule tracteur a été activé ou ne l'a pas été ; et
un dispositif de commande (103) pour la commande de l'actionneur ;
dans lequel le système de freinage de véhicule tracté comprend en outre une unité de détermination de force de couplage (102) qui est mécaniquement couplée au premier couplage mécanique, ladite unité de détermination de force de couplage étant configurée pour émettre un signal de couplage qui est indicateur d'une force de tractage qui est exercée par le véhicule tracteur sur le véhicule tracté, et vice versa, au travers du premier couplage mécanique, ledit dispositif de commande étant configuré pour la commande de l'actionneur selon le signal de couplage et le signal de frein reçu pour réduire la force de tractage ;
dans lequel l'unité de détermination de force de couplage comprend un capteur de force (200) pour la mesure de la force de tractage, ledit capteur de force étant mécaniquement couplé au premier couplage mécanique ;
**caractérisé en ce que** le capteur de force comprend :
un ressort de détection de force (206, 207) qui est agencé entre le premier couplage mécanique et un cadre (203) du véhicule tracté ;
une unité de détermination de position (210) pour la détermination de la quantité d'extension ou de compression du ressort de détection de force ; et
une unité de calcul de force pour le calcul de la force de tractage sur la base d'une constante de ressort du ressort de détection de force et la quantité déterminée d'extension ou de compression ;
dans lequel le capteur de force comprend en outre un amortisseur (220) pour l'amortissement du mouvement relatif entre le premier couplage mécanique et le cadre du véhicule tracté.

2. Système de freinage selon la revendication 1, comprenant en outre un frein à main pour l'actionnement manuel du frein.

3. Système de freinage selon la revendication 1, dans lequel l'actionneur, le frein à main, et le frein sont mécaniquement couplés au moyen d'un troisième couplage mécanique pour permettre au frein d'être actionné à la fois par le frein à main et par l'actionneur.

4. Système de freinage selon l'une quelconque des revendications précédentes, comprenant en outre un capteur d'actionneur (104, 106) pour la sortie d'un signal de capteur d'actionneur qui est indicateur de la force de freinage appliquée, dans lequel le dispositif de commande est configuré pour la commande de l'actionneur selon le signal de couplage, le signal de capteur d'actionneur, et le signal de frein reçu ;
dans lequel le capteur d'actionneur comprend un capteur de force qui est mécaniquement couplé audit deuxième couplage mécanique, ledit capteur de force étant configuré pour détecter la force qui est transmise au frein, dans lequel le capteur d'actionneur est configuré pour émettre le signal de capteur d'actionneur selon ladite force détectée ; ou
dans lequel le capteur d'actionneur comprend un capteur de tension et/ou de courant pour la mesure d'une tension et/ou d'un courant qui sont fournis à ou utilisés par l'actionneur pour l'actionnement dudit frein.

5. Système de freinage selon la revendication 4, dans lequel le dispositif de commande est configuré pour commander l'actionneur de sorte qu'une ampleur d'une cadence temporelle de changement dans la force de freinage appliquée par le frein dépende d'au moins un parmi le signal de capteur d'actionneur et le signal de couplage.

6. Système de freinage selon la revendication 4 ou 5, dans lequel la force transmise au frein dépend d'au moins un d'une rotation ou d'un déplacement du deuxième couplage mécanique par rapport au frein, dans lequel le capteur d'actionneur est configuré pour détecter ladite rotation et/ou ledit déplacement et pour sortir le signal de capteur d'actionneur selon ladite rotation et/ou ledit déplacement détectés.

7. Système de freinage selon l'une quelconque des revendications 4 à 6, dans lequel l'actionneur est configuré pour la réception d'un signal d'actionnement du dispositif de commande selon lequel l'actionneur actionne ledit frein, ledit capteur d'actionneur comprenant une unité d'estimation pour l'estimation de la force de freinage sur la base d'une valeur de courant du signal d'actionnement et/ou d'une ou plusieurs valeurs précédentes du signal d'actionnement.

8. Système de freinage selon les revendications 4, 6 et 7, dans lequel l'actionneur comprend un moteur électrique pour le déplacement et/ou la rotation du deuxième couplage mécanique, et dans lequel le signal d'actionnement est au moins un parmi un courant et une tension fournis au moteur électrique.

9. Système de freinage selon l'une quelconque des revendications précédentes, dans lequel le dispositif de commande est configuré pour commander l'actionneur seulement lorsque la force de tractage correspond à une force de poussée exercée par le véhicule tracteur sur le véhicule tracté qui est supérieure à un premier seuil prédéfini ou lorsque la force de tractage correspond à une force de traction exercée par le véhicule tracté sur le véhicule tracteur qui est supérieure à un deuxième seuil prédéfini.

10. Système de freinage selon l'une quelconque des revendications précédentes, dans lequel le dispositif de commande est configuré pour commander l'actionneur pour limiter la force de freinage appliquée pour qu'elle soit inférieure à un troisième seuil prédéterminé ;
dans lequel le deuxième couplage mécanique est doté d'un commutateur de force d'actionneur (200) qui comprend un cadre (204) qui est fixement couplé à un parmi le frein et l'actionneur et un élément de commutation (205) qui est monté de manière mobile dans ledit cadre du commutateur de force d'actionneur entre une première et seconde position, dans lequel l'élément de commutation est fixement couplé à l'autre du frein et de l'actionneur, le commutateur de force d'actionneur comprenant en outre un commutateur (208, 209) qui est configuré pour la sortie d'un troisième signal de commutation lorsque l'élément de commutation est dans la première position, et un ressort (206, 207) pour la sollicitation par ressort de l'élément de commutation pour qu'il soit dans la seconde position, dans lequel le ressort est configuré de sorte que lorsqu'une différence de force appliquée à l'élément de commutation et au cadre du commutateur de force d'actionneur excède un quatrième seuil prédéterminé, l'élément de commutation est dans la première position, dans lequel le commutateur de force d'actionneur est raccordé au dispositif de commande et le dispositif de commande est configuré pour ladite limitation de la force de freinage appliquée selon le troisième signal de commutation.

11. Système de freinage selon l'une quelconque des revendications précédentes, comprenant en outre une entrée de puissance pour la réception de puissance du véhicule tracteur, ladite entrée de puissance étant raccordée au dispositif de commande, à l'actionneur, et/ou à un autre composant électrique dans le système de freinage.

12. Véhicule tracté (2) étant configuré pour être tracté par un véhicule tracteur (1), comprenant le système de freinage selon l'une quelconque des revendications précédentes.
